Europäisches Patentamt

European Patent Office

Office européen des brevets

(11) Publication number: **0 182 618**
**B1**

# EUROPEAN PATENT SPECIFICATION

(45) Date of publication of patent specification: **11.07.90**

(51) Int. Cl.⁵: **G 01 N 21/51, G 01 N 21/47**

(21) Application number: **85308305.3**

(22) Date of filing: **14.11.85**

(54) Sample cell for light scattering measurements.

(30) Priority: **15.11.84 US 671181**

(43) Date of publication of application:
**28.05.86 Bulletin 86/22**

(45) Publication of the grant of the patent:
**11.07.90 Bulletin 90/28**

(84) Designated Contracting States:
**DE FR GB IT SE**

(56) References cited:
**EP-A-0 104 661
EP-A-0 158 948
GB-A-2 071 355
GB-A-2 141 553
US-A-4 078 863
US-A-4 490 042**

**IEEE TRANSACTIONS ON BIOMEDICAL
ENGINEERING, vol. BME-29, no. 2, February
1982, pages 106-111, New York, US; D.B. KAY et
al.: "A two-station multidimensional slit-scan
flow system: concept and optical
implementation"**

(73) Proprietor: **WYATT TECHNOLOGY
CORPORATION
820 East Haley Street
Santa Barbara California 931030 (US)**

(72) Inventor: **Reece, Jeff M.
735 Chelham Way
Santa Barbara California 92108 (US)**
Inventor: **Phillips, Steve
730 Elkus Walk NBR 204
Goleta California 93117 (US)**
Inventor: **Wyatt, Philip J.
820 East Haley Street
Santa Barbara California 93130 (US)**

(74) Representative: **Godsill, John Kenneth et al
Haseltine Lake & Co. Hazlitt House 28
Southampton Buildings Chancery Lane
London WC2A 1AT (GB)**

# EP 0 182 618 B1

**Description**

The present invention relates to a sample cell for light scattering measurements and as such will find broad utility in various fields of light scattering determinations.

Light scattering measurements are discussed at length in the following patent specifications;

U.S. Patent No. 4490042;

European Patent Application No. 0098095; and

European Patent Application No. 0102726.

European Patent Application No. 0104661 discloses a scattering cell with a prismatic output window for the light beam. Light incident on the prism is refracted to increase the angular separation between the scattered and unscattered light.

Prior to discussing the invention, the terms used herein will now be defined.

The term "light" shall mean electromagnetic radiation, either monochromatic or of a broader frequency range, either unpolarized or polarized.

The term "size parameter" shall mean $\rho$, where $\rho = 2\pi a/\lambda$, a is the mean particle radius, and $\lambda$ is the wavelength of the incident electromagnetic radiation in the medium in which the particles are measured.

The term "very small particle" shall mean any particle whose size parameter is less than one.

The term "small particle" shall mean any particle whose size parameter is less than six.

The term "large particle" shall mean a particle whose size parameter is greater than six.

The term "beam" shall mean light propagating in a parallel or nearly parallel direction, i.e. so as to be substantially non-divergent.

The term "beam diameter" of an incident light source, with a Gaussian intensity profile, such as a laser, shall refer to the diameter of the beam measured between the points at which the intensity has fallen to $1/e^2$ the intensity at the centre of the beam.

The term "forward scattering direction" shall mean all rays, i.e. directed line segments, propagating at an angle less than 90 degrees with respect to the direction of the incident beam.

The term "backward scattering direction" shall mean all rays i.e. directed line segments, propagating at an angle greater than 90 degrees with respect to the direction of the incident beam.

For plane polarized light, the plane perpendicular to the direction of the wave's electric field is called the V-plane and said plane polarized light is vertically polarized with respect to said perpendicular plane. The corresponding H-plane is perpendicular to the V-plane and contains the incident wave's electric field.

The terms "background effects" and "background contributions" shall mean any source of light detected by an instrument which is not due to the scattering of light from the sample. We will be concerned solely with background contributions arising from interactions of the incident beam with the sample cell and related apparatus. We will assume any background produced by light scattering from a pure solvent itself is negligible.

According to one aspect of the invention, there is provided an apparatus for use in measuring light scattering properties of particles in a liquid suspension illuminated by a collimated light beam, the apparatus comprising: a cell formed of light transmissive material and defining a channel for the liquid suspension; liquid suspension inlet and outlet means for permitting liquid suspension to be supplied to and removed from said channel; and light inlet and outlet means for allowing passage of a collimated light beam through the channel in the direction along its length, whereby detectors can be arranged to detect light scattered from the liquid suspension in said channel, the scattered light passing through the channel wall and through the light transmissive material, characterized in that the inlet and outlet means are so arranged that the beam will pass into, through and beyond said cell without deflection other than by scattering by the liquid suspension.

A preferred embodiment comprises a right cylinder with a hole bored through a diameter. The cylinder and hole are optically polished and the cylinder is surrounded by an array of detectors lying in the plane of the hole and parallel to the base of the cylinder. Means are provided for introducing and removing a particle-bearing sample fluid. The sample introduced into the hole, thereby, is illuminated by a collimated light beam whose diameter is much smaller than (e.g. less than one half) the diameter of the hole. This beam passes directly through the hole and enters and leaves the cell by means of special windows mounted externally of the cell. Because of the slight difference of refractive index normally existing between the fluid and the surrounding glass cell, very little stray or background light enters the detectors, even at very small scattering angles. Such a structure also provides means for attenuating small angle scattered intensities which are a source of detector saturation in conventional light scattering instruments.

According to another aspect of the invention, there is provided a method of measuring light scattered by particles suspended in a liquid, comprising the steps of: placing the particle-carrying liquid at an optically polished surface of light transmissive material; illuminating the liquid with a collimated light beam passing parallel to the surface; and detecting light which has been scattered by particles in the liquid, the scattered light passing through said polished surface and a portion of said material; and characterised by the step of arranging the collimated light beam to pass along and beyond the surface without deflection other than by scattering by the liquid suspension.

Certain embodiments of the method of the invention, correct for refraction of, for example, apparatus embodying the present invention, the method being characterised by the step of determining a required set of scattering angles at which scattering is to be detected, and the step of placing detector means, for detecting light passing through the cell having been scattered by liquid suspension, at transformed angular positions such that said transformed positions correspond respectively to the required set of scattering angles.

In certain embodiments of the method, the scattered intensities of light are normalized by:

A. measuring the intensities of light after it has passed through the sample along the beam path;

B. measuring a fraction ($I_s$) of the incident light source intensity before the light enters the sample; and

C. dividing all subsequently measured scattered intensities at various scattering angles by the quantity $\sqrt{I_f I_s}$.

For a better understanding of the invention and to show how the same may be carried into effect, reference will now be made, by way of example, to the accompanying drawings, in which:

Figure 1 shows a top, diagrammatic, view of a cylindrical scattering cell surrounded by a set of collimated detectors and illuminated by a collimated light beam;

Figure 2 presents a cross-section of a preferred embodiment of the scattering cell showing a flow channel, cell windows, and fittings for introducing samples;

Figure 3 shows the application of Snell's Law at the interface between two media; and

Figure 4 is a top view of a preferred embodiment showing the sample cell, a normalization beam monitor, several typical detector means, and an illumination source.

Many important laboratory and industrial programs are involved with the measurement of fine particles in suspension by light scattering techniques. Foremost among them is the light scattering procedure for the determination of molecular weights of unknown solutes suspended in various types of solvents. Without going into the details of this procedure, which is described in many texts such as M. Kerker, *The Scattering of Light and Other Electromagnetic Radiation*, (Academic Press, New York 1969), the general measurement involves the preparation of a suspension of the unknown material followed by its illumination by a collimated beam of monochromatic light. The intensity of the light scattered by the suspension is then measured as a function of angle and solute concentration. Since the scattering properties of the sample cell or cuvette containing the solution may interfere with this determination, it is important to use a cell whose so-called "background" contributions will be minimal and affect the determinations least. Ideally, the cell will permit the measurement of the scattering properties of the solute particles or molecules at increasingly lower concentrations.

Many types of assays and bioassays, such as described in the patent specifications cited above or the Wyatt chapter in the book edited by Charalambous entitled *Analysis of Foods and Beverages: Modern Techniques*, (Academic Press, Orlando 1984) involve the preparation of aqueous suspensions. Subsequent measurement of these suspensions by light scattering means involves detecting very small changes in the measured light scattering properties of the solutions. Often, the accuracy of the results will be affected by background effects created by the scattering cell itself. Even the very simplest determinations of transmission or optical density, such as performed by conventional spectrophotometers of the type manufactured by Bausch and Lomb, depend critically on the background contributions of the liquid-containing cell. Furthermore, some compounds, such as those separated by means of liquid chromatography, are obtained in such small volumes that the cell containing them also must have a very small volume, typically on the order of microliters or less. Thus, "background" effects become increasingly important because of the close proximity of the sample cell liquid and air interfaces to the field of view of the detection system.

While studying many of the aforementioned measurements, we have discovered a cell structure and method of measurement that permits the examination by light scattering means of extremely small volumes of liquid-borne samples at virtually all scattering angles, no matter how small, without introducing significant background artifacts from the containing sample cell itself. This cell structure permits, in addition, the determination of the actual light flux incident upon the sample being examined, an often important requirement for many light scattering applications.

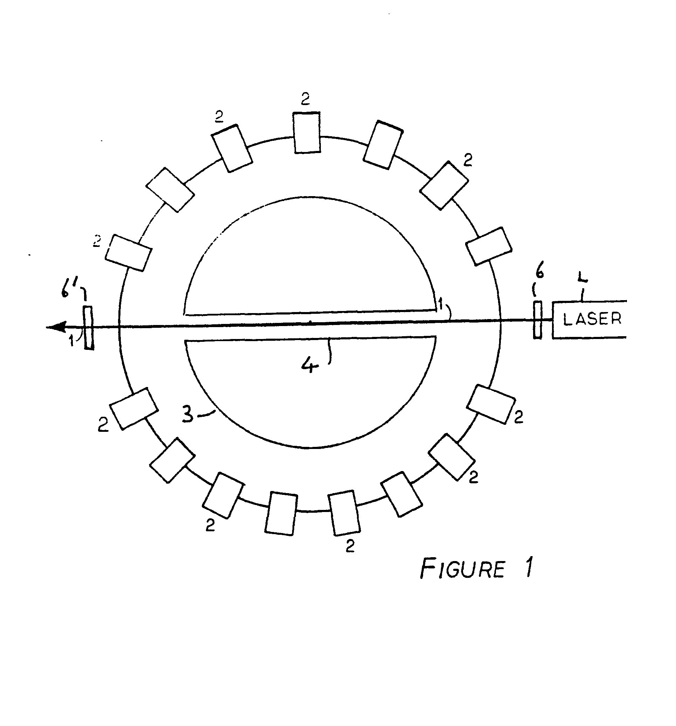

A diagrammatic representation of an embodiment of the invention is shown in Figure 1. An incident light source, such as a monochromatic beam 1 produced by a laser L passes along a diametrically arranged hole 4 through a sample cell 3. Also shown in this figure is a set of discrete detectors 2 spaced circumferentially about this cell. Each detector is collimated so that its field of view includes only a very small volume at the centre of the cell. The interfaces between the cell and the environment from which the light originates and to which it returns are defined by windows 6 and 6' positioned as far as possible from the centre of the cell so that background scattering at these interfaces has negligible effect at the detectors 2.

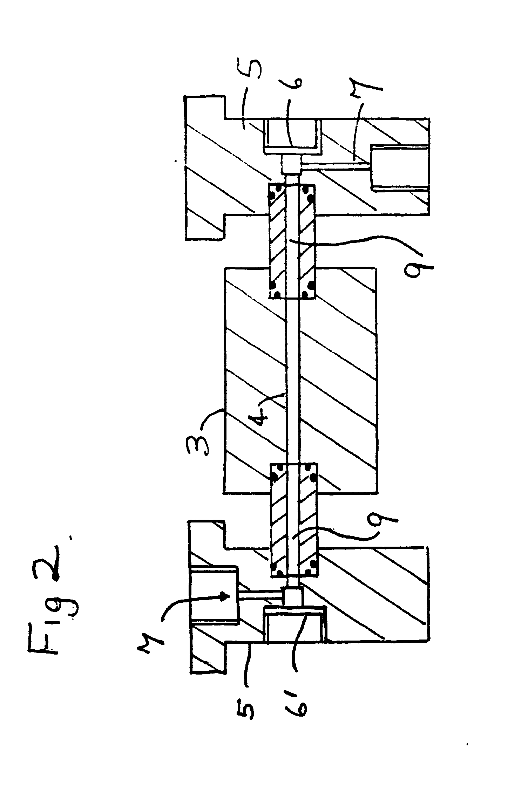

Figure 2 presents a cross-section of the scattering cell of the preferred embodiment of the invention. It comprises a cylinder 3 of glass or other transparent material of refractive index generally chosen close to the index of the solvent carrying the sample. Through the cylinder, the hole 4 is drilled along a diameter of the cylinder and lying in the plane of the detector array. The outer circumference of the cylinder and the hole interior surface are optically polished to remove any surface irregularities. Attached to each end of the cylinder hole 4 is a fixture 5 containing the optical window 6 or 6' and a bore 7 to carry the sample into and out of the cell.

Each fixture 5 contains a passage 9 to convey the liquid-borne sample into or out of the cell hole 4. Note that the light beam that passes through the cell is, in the preferred embodiment of this invention, of even smaller cross section than the hole 4. A typical cell would have a hole diameter of 2.0 mm and be illuminated with a laser beam of diameter 0.4 mm such as is produced by a special He-Ne laser manufactured by Melles Griot. The cylinder diameter is about 25 to 30 mm and the spacing of the windows 6 and 6' from the cylinder is about 15 mm.

As should be evident from Figures 1 and 2, if the refractive index of the cylinder is the same as the refractive index of the liquid passing through the cell, the set-up would correspond to the geometry of the large radius of curvature structure of Figure 1 and without refraction; yet that portion of the beam which passes through the cell does not strike any surface within the field of view of any detector. As seen in Figure 2, the beam entrance and exit windows 6 and 6' are far removed from the centre of the cell, which eliminates the background contributions associated with the beam traversing an air/glass/liquid interface. The distance of the windows 6 and 6' from the centre of the cell, from which scattering is detected, is about 25 to 30 mm, i.e. about 12 to 15 times the diameter (of maximum cross-sectional dimension) of the hole 4. In general that ratio is preferably at least 8 and, as seen in the specific example, advantageously at least 12.

In addition, the sample volume contained within this cell is extremely small relative to the volume required for the traditional cell of such large radius of curvature. The actual volume of the sample would depend on the diameter of the hole 4 cut into the cylinder. Light scattered from this small sample volume will not be attenuated significantly as it passes through the glass cell region to the detectors. This also permits the examination of samples of greater particle density without the usual multiple scattering degradations that would be caused by the intervening particles in a comparably sized scattering cell, i.e. a cell where the glass region of the present invention were replaced by an additional liquid sample.

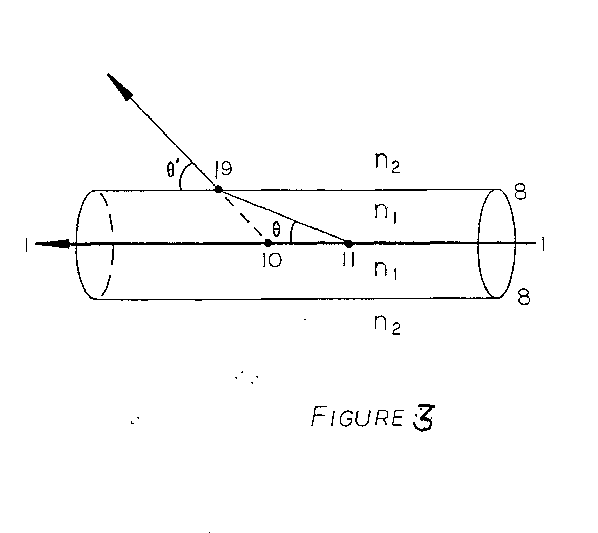

Any difference of refractive index between the solvent fluid passing through hole 4 and that of the glass cylindrical cell 3 surrounding it may be used to advantage. It has already been stated that these refractive indices will normally be quite close. It will now be demonstrated that they can be different, whilst it is possible to obtain measurements of light scattered at very small angles by particles or molecules illuminated by the highly collimated light source with negligible background contributions. Typically, the refractive index of the liquid $n_1$ will be that of water, 4/3, while that of the glass $n_2$ will be about 3/2. Applying Snell's Law (see Figure 3) to determine the refraction of a ray striking the water-glass interface 8 of the hole 4 at an angle $\theta$ yields the result

$$n_1 \sin \left( \frac{\pi}{2} - \theta \right) = n_2 \sin \left( \frac{\pi}{2} - \theta' \right), \tag{1}$$

where the angle of incidence is $\pi/2 - \theta$ and the angle of refraction is $\pi/2 - \theta'$. Expanding the sine functions in Eq. (1) and collecting terms results in

$$n_2 \cos \theta' = n_1 \cos \theta. \tag{2}$$

Note that the point 19 of incidence for the case of the scattering cell of the preferred embodiment lies ahead, i.e. to the left, of the centre 10 of the cell and is on the interface. A detector means detecting light at an angle $\theta'$ would be collimated to be centered on point 10.

It is interesting to note that as the scattering angle $\theta$ becomes very small, i.e. approaches zero, the source of the scattering event 11 whose refracted rays are detected at $\theta'$ moves to the right of the centre of the cell 10. In the limit as $\theta \to 0$, $\theta' \to \cos^{-1}(8/9) = 27.27°$. Thus, no matter how small the scattering angle $\theta$, the refracted ray will be detected at an angle $\theta'$ sufficiently distant from all interfaces to permit said detector means to avoid receiving any direct contributions from the incident beam 1.

The scattering angle $\theta$ of Figure 3 represents the most important independent variable of a light scattering measurement. Accordingly, in the preferred embodiment of our invention, the detector means 2 of Figure 1 should be placed so that there is a one-to-one correspondence with the set of $\theta$-angles selected for an experiment. An often used set of scattering angles $\theta$ is selected such that the angles are equally spaced in $\sin \theta/2$. The latter choice is particularly convenient for certain types of measurements related to molecular weight determinations or small particles whose refractive indices are very close to that of the medium surrounding them. If the detectors surrounding the glass cell were spaced equidistantly in $\theta'$ or $\sin \theta'/2$, the interpretation of the data so-detected in terms of the physically important scattering angle $\theta$ would require the complex mathematical inversion of Eq. (1) for each measurement. Instead, in a preferred embodiment of our invention, we place the detector means about the cell at those angles $\theta'$ that correspond to the selected set of scattering angles $\theta$. For example, for equidistant spacing in $\sin \theta/2$ such that

$$0.2 \le \sin \theta/2 \le 0.9, \tag{3}$$

which is a range frequently found in scattering measurements, Eq. (1) may be solved for $\theta'$ in terms of $\sin \theta/2$ as follows:

$$n_2 \cos \theta' = n_1 \cos \theta = n_1 (1 - 2 \sin^2 \theta/2). \tag{4}$$

Hence

$$\theta' = \cos^{-1} \left[ \frac{n_1}{n_2} (1 - 2 \sin^2 \theta/2) \right]. \tag{5}$$

4

For a typical case where the cell is optical glass of refractive index 3/2 and the sample is in a liquid of refractive index 4/3, a set of detectors at angle $\theta'$ would be placed according to the transformation table below:

### Table of Transformed Scattering Angles

| $\sin \theta/2$ | $\theta$ | $\theta'$ |
|---|---|---|
| .2 | 23.07 | 35.13 |
| .25 | 28.96 | 38.95 |
| .3 | 34.92 | 43.21 |
| .35 | 40.97 | 47.84 |
| .4 | 47.16 | 52.81 |
| .45 | 53.49 | 58.07 |
| .5 | 60.00 | 63.61 |
| .55 | 66.73 | 69.44 |
| .6 | 73.74 | 75.59 |
| .65 | 81.08 | 82.08 |
| .7 | 88.85 | 88.98 |
| .75 | 97.18 | 96.38 |
| .8 | 106.26 | 104.41 |
| .85 | 116.42 | 113.30 |
| .9 | 128.32 | 123.45 |

To make a measurement at a very small scattering angle in the forward direction will require a very precise placement and collimation of the detector means, since refraction causes a small range of $\theta'$ values to correspond to a larger range of $\theta$-values, for $\theta$ near 0°. For a measurement at, say, $\theta = 5.73°$, the detector means would have to be placed at 27.82°, a scant 30' of arc from the limiting $\theta = 0°$ value, where $\theta' = 27.27°$. Nevertheless, light scattered in this direction may be precisely intercepted by the carefully set detector means.

As the average particle size parameter p becomes larger, the relative intensity of light scattered in the forward direction to that scattered into the backward direction becomes very large. For many types of instruments detecting scattered light at small angles, this becomes a troublesome problem as large forward scattering contributions may overwhelm and saturate the detector means monitoring forward scattering events. This is not true in the present case because of the unique attenuation of such forward scattered light. As $\theta \to 0$, the fraction of scattered light flux refracting into angle $\theta'$ becomes progressively smaller and becomes zero when $\theta = 0$. In Figure 3, the fraction of scattered light flux reflected at the water glass interface 8 in terms of the angle of incidence, $\theta$, may be determined from Fresnel's relations discussed, for example, in the textbook *Light* by R. W. Ditchburn (Interscience Publications, New York 1955). For the case of vertically polarized incident light, the reflected fraction $\rho_w$ from liquid to glass is given by the relation

$$\rho_w = \frac{\sin^2(\theta' - \theta)}{\sin^2(\theta' + \theta)} \qquad (6)$$

where $\theta$ is given by Eq. (2). Note that as $\theta \to 0$, $\rho_w \to 1$, i.e. most of the light is reflected and only a decreasing fraction $1 - \rho_w$ is transmitted to the small angle detector means. In the case of normal incidence, $\theta$ and $\theta' = \pi/2$. Taking this limiting case and applying Snell's law, we obtain

$$\tau_{w_{90°}} = \frac{(n_1 - n_2)^2}{(n_1 + n_2)^2} = \frac{(1/6)^2}{(17/6)^2} = 0.34\% \qquad (7)$$

Thus by placing the scattering particles in a medium of refractive index *less* than that of the surrounding

5

scattering cell, which is a natural procedure whenever particles are measured in solution, this embodiment permits the detection of light scattered at small angles without saturating the small angle detector means.

Although we have explained the elements of our invention by means of a preferred cylindrical embodiment discussed above, it will be clear to those skilled in the art of light scattering that our invention applies equally to many other geometries and cell structures. A spherical form is of particular significance as it represents the hydrosol equivalent of the single particle aerosol particle analyser. Highly irregular particles will scatter light as a complex function of both the polar angle $\theta$ and the azimuthal angle $\phi$. The variation of intensity with $\phi$ at a fixed $\theta$ for a spherically symmetric particle, on the other hand, is a simple function of $\cos^2\phi$ and $\sin^2\phi$. The detection, classification, and measurement of particles of complex structure requires, therefore, that measurements be performed at many $(\theta, \phi)$ locations that do not lie in a plane. If the incident light be plane polarized vertically with respect to a set of detectors lying along a great circle of the sphere/air interface, then there is another great circle at right angles to this with respect to which the incident light is horizontally polarized. The measurement and classification of such particles from the collected light scattering data are discussed in the European Patent Application No. 0098095. Note also that a sphere is not the only three dimensional structure for which our invention will apply, though it certainly provides the greatest flexibility for scattering measurements. Other useful three dimensional structures include cubes and many regular and irregular polyhedra.

It is interesting to note that the transformed detector locations discussed above for the cylindrical cell embodiment of our invention apply equally well to a spherical cell. The angle of incidence of the scattered ray depends only on $\theta$ insofar as the application of Snell's law is concerned and is independent of $\phi$. The azimuthal scattering angles $\phi$ would be selected to define different sets of detectors, each lying on a great circle.

It should be noted that the hole 4 through the cell can contain additional structures such as a small spherical cavity at the centre of the cell. This cavity would allow scattered light originating at the centre of the cell to proceed along a radial line out of the cell and into the detectors. This would eliminate the refraction effect at the liquids/glass interface arising from the non-perpendicularity of the scattered ray at the interface. Hence, all detectors, except those whose field of view is obscured by hole 4, will be simultaneously viewing the centre of the cavity. Such an arrangement would be important, for example, when viewing a single particle is desired, which requires many detectors viewing the same particle at the same location at the same time. The spherical cavity within the spherical cell could be easily fabricated, for example, by assembling the spherical cell from two hemispheres ground on a lens grinding machine. After cutting a sample introduction channel in each hemisphere and a central hemispherical cavity in each hemisphere, the two hemispheres and cavities would be polished and joined together by index matching cement or adhesive.

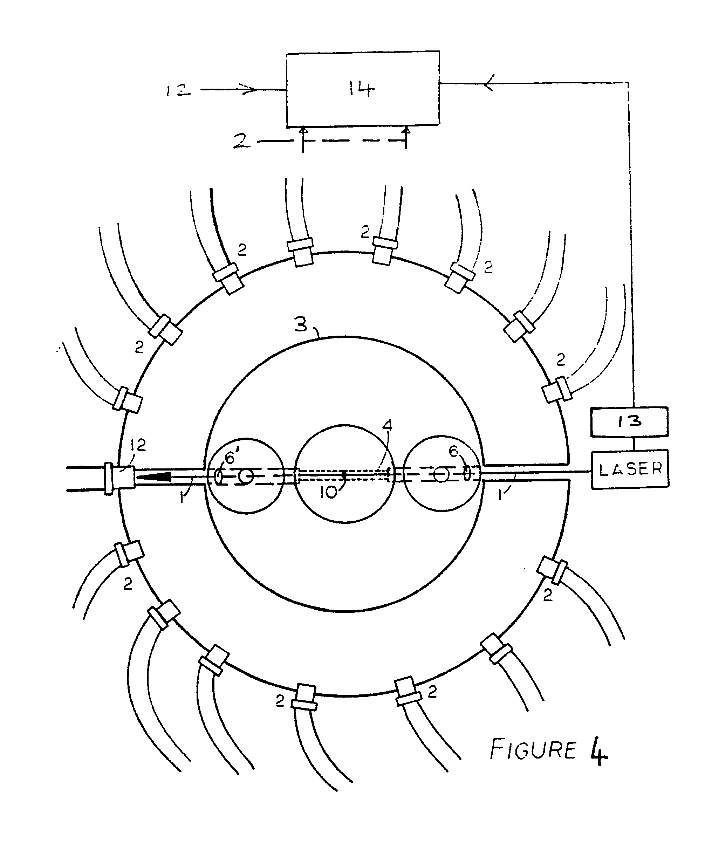

Figure 4 is a diagram showing a plan view of the assembled cell complete with fixtures and surrounded with an array of detectors. Consider a beam monitor 12 positioned to monitor the beam intensity after passing through the sample and window 6'. If $n$ is the number of particles per ml and $\sigma$ is the average scattering cross section per particle, then in a path length X, the intensity I of the illumination source will be attenuated accordingly to Beer's Law as:

$$I = I_o \exp - (n \sigma X), \tag{8}$$

where, $I_o$ = the incident intensity. For many types of measurements, it is important that the scattered intensities detected be normalized to the intensity of the illumination incident upon the scattering particles. This normalization is particularly important in the measurement of molecular weights or monitoring critical growth processes. Some instruments split the incident beam and use the fraction removed thereby as this normalization factor $I_o$. However, this value, so-obtained, may not well present the actual intensity at the sample because of the attenuation of the intervening sample and reflections at the cell interfaces. Furthermore, this attenuation will vary from sample to sample. By introducing a beam monitor such as shown in Figure 4, we are able to obtain very accurate representations of the normalized scattered intensities as follows.

Consider that the total sample path through the cell hole 4 is 2X and that the detectors 2 are collimated to view only the small volume at the centre of the hole, a distance X from the beam entrance window 6 in Figure 4. The intensity at the beam monitor 12 relative to the incident intensity at the entrance window is given by application of Beer's Law with the incorporation of the Fresnel reflection fraction f at each air-glass interface and Fresnel reflection fraction g at each glass/liquid interface. Hence, the total reflection fraction is $F = f + g - fg$, whence:

$$I_2 = I_o (1 - F)^2 \cdot \exp - (2n \sigma X). \tag{9}$$

The intensity at the centre of the sample, $I_1$, on the other hand, is just

$$I_1 = I_o (1 - F) \exp - (n \sigma X). \tag{10}$$

Instead of normalizing the scattered intensities by $I_o$, we should normalize by the factor of $I_1$ of Eq. (10).

6

However, the normalization factor

$$N = I_1 = I_o (1 - F) \exp - (n \sigma X),\qquad(11)$$

$$= \sqrt{I_o} \ \sqrt{I_2}.$$

Furthermore, any normalization factor which is proportional to N is an equally suitable normalization factor. We are only concerned with the relative intensity at the centre of the cell which varies from sample-to-sample due to differences in turbidities and from time-to-time due to the time varying intensity of the light source.

$$\text{Let } N_2 = \sqrt{I_3} \ \sqrt{I_2}\qquad(12)$$

$$\text{where } I_3 = K I_o, \ o < K < 1$$

Hence, by monitoring a small fraction, K, of the incident source intensity at the source monitor 13 and monitoring $I_2$ at the beam monitor 12, one obtains $N_2$ via Eq. (12). The value of K need not be known as $N_2$ is only a relative normalization factor.

This final normalization implemented by a computing circuit 14 is obtained as the square root of the product of relative intensities at the beam monitor 12 and an external monitor 13 and represents, therefore, the optimum normalization constant since it is always proportional to the real time value at the sample.

While there has hereinbefore been presented what is at present considered to be the preferred embodiment and process of our invention which has been described a scattering cell and technique for measuring the scattered light intensities from small particles and molecules in solution over a broad range of scattering angles including those near zero degrees, it will be apparent to those of ordinary skill in the art of light scattering that many modifications and variations may be made therefrom without departing from the scope of the invention as defined in the appended Claims. All such variations and modifications, therefore, are considered to be part of the invention.

Some of the developments and studies associated with this invention were performed under Contract #DAMD17—84—C—4155 from the U.S. Army Medical Research & Development Command. The U.S. Government has certain non-exclusive rights under the terms of this contract.

**Claims**

1. An apparatus for use in measuring light scattering properties of particles in a liquid suspension illuminated by a collimated light beam, the apparatus comprising: a cell (3) defining a channel (4) for the liquid suspension; liquid suspension inlet and outlet means (7) for permitting liquid suspension to be supplied to and removed from said channel (4); and light inlet and outlet means (6, 6') for allowing passage of a collimated light beam through the channel (4) in the direction along its length, characterized in that the cell is formed of light transmissive material, whereby detectors (2) can be arranged to detect light scattered from the liquid suspension in said channel, the scattered light passing through the channel wall and through the light transmissive material, and in that the inlet and outlet means (6, 6') are so arranged that the non scattered beam will pass into, through and beyond said cell without deflection.

2. An apparatus according to Claim 1 wherein the light inlet and outlet means (6, 6') are spaced from the middle of the channel (4) by a distance at least eight times the maximum cross-sectional dimension of a major portion of the channel (4).

3. An apparatus as claimed in Claim 1 or 2 and in which the cell (3) has an optically polished outer surface and is so constructed that a cross section of the cell taken through the channel (4) has a substantially circular form and the channel (4) extends chordwise of that cross section, having an optically polished internal surface.

4. An apparatus as claimed in Claim 3 in which the cell (3) is of cylindrical form.

5. An apparatus as claimed in Claim 3 in which the cell (3) is of spherical form.

6. An apparatus as claimed in Claim 5 in which the cell is formed from two optically polished hemispheres joined together with a refractive index matching adhesive.

7. An apparatus as claimed in any preceding claim in which the light and liquid inlet and outlet means are provided by components (5) connected respectively to an inlet and an outlet of the channel (4).

8. An apparatus as claimed in Claim 7 in which the components each define a duct for liquid suspension, each duct having a first branch (9) in line and communicating with said channel (4) and having a light transmissive region (6, 6') forming a light inlet or outlet as the case may be, there being a second duct in the component angled with respect to and communicating with said first duct (9) whereby liquid suspension can be supplied to or removed from the first duct (9) via the second duct.

9. An apparatus as claimed in any preceding claim which includes a laser arranged to supply the collimated light beam of a form with a maximum cross-sectional dimension less than that of the channel (4).

10. An apparatus as claimed in Claim 9, wherein the laser is such that the maximum cross-sectional dimensions of the light beam in the channel (4) is less than half the minimum cross-sectional dimension of the channel (4).

11. An apparatus as claimed in any one of the preceding claims and including means (2) for detecting scattered light.

12. An apparatus as claimed in claim 11, wherein the means for detecting are arranged so that the scattered light can be substantially simultaneously detected over a range of contiguous scattering angles.

13. An apparatus as claimed in claim 11 or 12, wherein the means for detecting are arranged to detect light substantially normal to the outer surface of the cell (3).

14. An apparatus as claimed in any one of the preceding claims, wherein the light transmissive material of the cell (3) has a higher refractive index than the liquid suspension.

15. A method of measuring light scattered by particles suspended in a liquid, comprising the steps of: placing the particle-carrying liquid at an optically polished surface of light transmissive material; illuminating the liquid with a collimated light beam; and detecting light which has been scattered by particles in the liquid, the scattered light passing through said polished surface and a portion of said material; characterised in that the collimated light beam is incident on the liquid in a direction parallel to said surface such that the non scattered beam passes along and beyond the surface without deflection.

16. A method according to Claim 15 wherein the material has a refractive index which is greater than that of said liquid.

17. A method according to Claim 15 or 16 wherein the particle-carrying liquid is placed in a straight channel (4) extending through said material.

18. A method according to Claim 17 wherein the collimated light beam is produced by a laser and has a maximum cross-sectional dimension in the channel which is less than the minimum cross-sectional dimension of said channel.

19. A method as claimed in any one of Claims 15 to 18, wherein the scattered intensities of light are normalized by:

A. measuring the intensity $I_s$ of light after it has passed through the sample along the beam paths;

B. measuring a fraction $I_f$ of the incident light source intensity before the light enters the sample; and

C. dividing all measured scattering intensities at various scattering angles by the quantity $\sqrt{I_f I_s}$.

20. A method according to any one of Claims 15 to 19, wherein the material is in the form of a cylinder and the particle-carrying liquid is placed in a channel extending chordwise through the cylinder.

21. A method according to any one of Claims 15 to 19, wherein the material is in the form of a sphere and a particle-carrying liquid is placed in a channel which extends diametrically of the sphere.

22. A method as claimed in any one of the preceding claims 15 to 21, including the steps of determining a required set of scattering angles $\theta$ at which scattering is to be detected, and placing detector means (2), for detecting light scattered by the particle-carrying liquid, at transformed angular positions $\theta'$ such that said transformed positions correspond respectively to the required set of scattering angles, whereby refraction effects can be corrected.

23. A method according to Claim 22 when appended to Claim 20, wherein the detector means (2) are disposed around the cylinder and the transformed angular positions $\theta'$ are derived from the scattering angles $\theta$ by the relation

$$\theta' = \cos^{-1}\left[\frac{n_1}{n_2}\cos\theta\right]$$

where $n_1$ is the refractive index of the scattering medium and $n_2$ is the refractive index of the cylinder.

24. A method according to Claim 22 when appended to Claim 21, wherein the detector means (2) are disposed around the sphere in sets lying along great circles, and the detector angular position, $\theta'$, referred to the polar axis through the liquid suspension, are derived from the scattering angles $\theta$ by the relation

$$\theta' = \cos^{-1}\left[\frac{n_1}{n_2}\cos\theta\right]$$

when $n_1$ is the refractive index of the scattering medium and $n_2$ is the refractive index of the sphere.

25. A method according to Claim 22, 23 or 24, in which the detector means are all arranged to detect light scattered from substantially the same point in the particle-carrying liquid.

**Revendications**

1. Appareil destiné à être utilisé pour mesurer les propriétés de dispersion de lumière de particules en suspension dans un liquide, cette suspension étant éclairée par un faisceau de lumière collimaté, l'appareil comprenant une cellule (3) définissant un canal (4) pour la suspension dans un liquide, des moyens (7) d'entrée et de sortie de suspension dans un liquide pour permettre à cette suspension d'être introduite dans le canal (4) et d'en être évacuée, et des moyens (6, 6') d'entrée et de sortie de lumière pour permettre le passage d'un faisceau de lumière collimaté à travers le canal (4) dans la direction de sa longueur, caractérisé en ce que: la cellule est formée d'une matière transmettant la lumière; des détecteurs (2) peuvent être disposés de manière à détecter la lumière dispersée par la suspension dans un liquide se trouvant dans le canal, cette lumière dispersée traversant la paroi du canal et la matière transmettant la lumière; et les moyens d'entrée et de sortie (6, 6') sont disposés de manière que le faisceau non dispersé pénètre, traverse et se propage au-delà de la cellule sans être dévié.

2. Appareil selon la revendication 1, dans lequel les moyens (6, 6') d'entrée et de sortie de lumière sont espacés du milieu du canal (4) d'une distance égale à au moins huit fois la dimension maximale de section transversale de la partie principale du canal (4).

3. Appareil selon la revendication 1 ou 2, dans lequel la cellule (3) comporte une surface extérieure polie de façon optique et est réalisée de manière telle qu'une section transversale de la cellule prise à travers le canal (4) a une forme sensiblement circulaire et que le canal (4) s'étend le long d'une corde de cette section transversale en présentant une surface interne polie de façon optique.

4. Appareil selon la revendication 3, dans lequel la cellule (3) a une forme cylindrique.

5. Appareil selon la revendication 3, dans lequel la cellule (3) a une forme sphérique.

6. Appareil selon la revendication 5, dans lequel la cellule est formée de deux hémisphères polis de façon optique et assemblés l'un à l'autre à l'aide d'un adhésif d'adaptation d'indice de réfraction.

7. Appareil selon l'une quelconque des revendications précédentes, dans lequel les moyens d'entrée et de sortie de lumière et de liquide sont constitués par des composants (5) raccordés respectivement à une entrée et à une sortie du canal (4).

8. Appareil selon la revendication 7, dans lequel les composants définissent chacun un conduit pour une suspension dans un liquide, chaque conduit comprenant une première branche (9) en alignement et en communication avec le canal (4) et comportant une région (6, 6') transmettant la lumière et formant une entrée et une sortie de lumière selon le cas, un second conduit étant formé dans le composant d'une façon inclinée par rapport au premier conduit (9) et en communication avec ce premier conduit, grâce à quoi la suspension dans un liquide peut être introduite dans le premier conduit (9) ou évacuée de ce conduit par l'intermédiaire du second conduit.

9. Appareil selon l'une quelconque des revendications précédentes, comprenant un laser disposé de manière a fournir le faisceau de lumière collimaté d'une forme ayant une dimension de section transversale maximale inférieure à celle du canal (4).

10. Appareil selon la revendication 9, dans lequel le laser est tel que la dimension maximale de section transversale du faisceau de lumière dans le canal (4) est inférieure à la moitié de la dimension minimale de la section transversale du canal (4).

11. Appareil selon l'une quelconque des revendications précédentes et comprenant des moyens (2) pour détecter la lumière dispersée.

12. Appareil selon la revendication 11, dans lequel les moyens pour la détection sont disposés de manière que la lumière dispersée puisse être détectée de façon sensiblement simultanée sur une plage d'angles de dispersion contigus.

13. Appareil selon la revendication 11 ou 12, dans lequel les moyens pour la détection sont disposés de manière à détecter la lumière de façon sensiblement perpendiculaire à la surface extérieure de la cellule (3).

14. Appareil selon l'une quelconque des revendications précédentes, dans lequel la matière transmettrice de lumière de la cellule (3) présente un indice de réfraction supérieur à celui de la suspension dans un liquide.

15. Procédé pour mesurer la lumière dispersée par des particules en suspension dans un liquide comprenant les étapes consistant: à placer le liquide transportant les particules à l'endroit d'une surface, polie de façon optique, d'une matière transmettant la lumière; à éclairer le liquide avec un faisceau de lumière collimaté et à détecter la lumière qui a été dispersée par les particules se trouvant dans le liquide, la lumière dispersée traversant la surface polie et une partie de la matière précitée, caractérisé en ce que le faisceau de lumière collimaté tombe sur le liquide dans une direction parallèle à ladite surface de manière telle que le faisceau non dispersé se propage le long et au-delà de cette surface sans être dévié.

16. Procédé selon la revendication 15, dans lequel la matière présente un indice de réfraction qui est supérieur à celui du liquide.

17. Procédé selon la revendication 15 ou 16, dans lequel le liquide qui transporte les particules est placé dans un canal rectiligne (4) s'étendant à travers ladite matière.

18. Procédé selon la revendication 17, dans lequel le faisceau de lumière collimaté est produit par un laser et a une dimension maximale de section transversale dans le canal qui est inférieure à la dimension minimale de section transversale de ce canal.

19. Procédé selon l'une quelconque des revendications 15 à 18, dans lequel on normalise les intensités de lumière dispersées par:

A. une mesure de l'intensité $I_f$ de la lumière après que celle-ci a traversé l'échantillon le long des trajets du faisceau;

B. une mesure d'une fraction $I_f$ de l'intensité de la source de lumière incidente avant que la lumière ne pénètre dans l'échantillon; et

C. une division de toutes les intensités dispersées mesurées sous divers angles de dispersion par la quantité $\sqrt{I_f I_s}$.

20. Procédé selon l'une quelconque des revendications 15 à 19, dans lequel la matière transmettant la lumière se présente sous la forme d'un cylindre et le liquide transportant les particules est placé dans un canal s'étendant le long d'une corde à travers le cylindre.

21. Procédé selon l'une quelconque des revendications 15 à 19, dans lequel la matière se présente sous la forme d'une sphére et le liquide transportant les particules est placé dans un canal qui s'étend diamétralement à la sphère.

22. Procédé selon l'une quelconque des revendications précédentes 15 à 21, comprenant les étapes consistant à déterminer un ensemble requis d'angles de dispersion $\theta$ sous lesquels la dispersion doit être détectée et à placer des moyens (2) de détection, servant à détecter la lumière dispersée par le liquide transportant les particules, à des positions angulaires transformées $\theta'$ telles que ces positions transformées correspondent respectivement à l'ensemble requis d'angles de dispersion, grâce à quoi les effets de la réfraction peuvent être corrigés.

23. Procédé selon la revendication 22 rattachée à la revendication 20, dans lequel les moyens (2) de détection sont disposés autour du cylindre et les positions angulaires transformées $\theta'$ sont dérivées des angles de dispersion $\theta$ à l'aide de la relation:

$$\theta' = \cos^{-1}\left[\frac{n_1}{n_2}\cos\theta\right]$$

où $n_1$ est l'indice de réfraction du milieu dispersant et $n_2$ est l'indice de réfraction du cylindre.

24. Procédé selon la revendication 22 rattachée à la revendication 21, dans lequel les moyens (2) de détection sont disposés autour de la sphère en ensembles se trouvant le long des grandes cercles et la position angulaire $\theta$ des moyens de détection rapportée à l'axe polaire à travers la suspension dans un liquide sont dérivés des angles de dispersion à l'aide de la relation:

$$\theta' = \cos^{-1}\left[\frac{n_1}{n_2}\cos\theta\right]$$

où $n_1$ est l'indice de réfraction du milieu dispersant et $n_2$ est l'indice de réfraction de la sphère.

25. Procédé selon la revendication 22, 23 ou 24, dans lequel les moyens de détection sont tous disposés de manière à détecter la lumière dispersée à partir sensiblement du même point dans le liquide transportant les particules.

**Patentansprüche**

1. Vorrichtung zur Verwendung bei der Messung der Lichtstreuungseigenschaften von Partikeln in einer durch einen kollimierten Lichtstrahl beleuchteten Flüssigkeits-Suspension, mit: einer Zelle (3), die einen Kanal (4) für die Flüssigkeits-Suspension bildet, Suspension-Einlaß- und Auslaßmitteln (7), die die Zufuhr der Flüssigkeits-Suspension zu dem Kanal (4) und die Ableitung derselben aus dem Kanal gestatten, und Licht-Eintritts- und Austrittsmitteln (6, 6'), die den Durchtritt eines kollimierten Lichtstrahls durch den Kanal (4) in Richtung seiner Länge gestatten, dadurch gekennzeichnet, daß die Zelle aus lichtdurchlässigem Material gebildet ist, wobei Detektoren (2) so angeordnet werden können, daß sie das von der Flüssigkeits-Suspension in dem Kanal gestreute Licht erfassen, das durch die Wand des Kanals und durch das lichtdurchlässige Material hindurchtritt, und daß die Eintritts- und Austrittsmittel (6, 6') so angeordnet sind, daß der ungestreute Strahl ohne Ablenkung in die Zelle eintritt, diese durchquert und aus der Zelle austritt.

2. Vorrichtung nach Anspruch 1, bei der die Licht-Eintritts- und Austrittsmittel (6, 6') zur Mitte des Kanals (4) in einem Abstand angeordnet sind, der wenigstens das 8-fache der größten Querschnittsabmessung des Hauptteils des Kanals (4) beträgt.

3. Vorrichtung nach Anspruch 1 oder 2, bei der die Zelle (3) eine optisch polierte äußere Oberfläche aufweist und so gestaltet ist, daß ein Querschnitt der Zelle in der Ebene des Kanals (4) im wesentlichen kreisförmig ist und der Kanal (4) längs einer Sehne dieses Querschnitts verläuft und eine optisch polierte Innenfläche aufweist.

4. Vorrichtung nach Anspruch 3, bei der die Zelle (3) eine zylindrische Form hat.

5. Vorrichtung nach Anspruch 3, bei der Zelle (3) eine sphärische Form hat.

6. Vorrichtung nach Anspruch 5, bei der die Zelle aus zwei optisch polierten Halbkugeln gebildet ist, die durch ein im Brechungsindex angepaßtes Klebemittel miteinander verbunden sind.

7. Vorrichtung nach einem der vorstehenden Ansprüche, bei der die Licht-Eintritts- und Austrittsmittel durch Bauteile (5) gebildet werden, die mit einem Einlaß bzw. einem Auslaß des Kanals (4) verbunden sind.

8. Vorrichtung nach Anspruch 7, bei der die Bauteile jeweils eine Leitung für die Flüssigkeits-Suspension bilden und jede Leitung einen mit dem Kanal (4) ausgerichteten und in Verbindung stehenden ersten Zweig (9) und ein lichtdurchlässiges Gebiet (6, 6') als Licht-Eintrittsfenster bzw. -Austrittsfenster aufweisen, wobei eine zweite Leitung in dem Bauteil in Bezug auf die erste Leitung (9) abgewinkelt ist und mit dieser in Verbindung steht, so daß Flüssigkeits-Suspension über die zweite Leitung zu der ersten Leitung zugeführt bzw. aus dieser abgeleitet werden kann.

9. Vorrichtung nach einem der vorstehenden Ansprüche, mit einem Laser, der so angeordnet ist, daß er den kollimierten Lichtstrahl in einer Form liefert, deren maximale Querschnittsabmessung kleiner ist als die des Kanals (4).

10. Vorrichtung nach Anspruch 9, bei der der Laser so gestaltet ist, daß die maximale Querschnittsabmessung des Lichtstrahls in dem Kanal (4) kleiner ist als die Hälfte der minimalen Querschnittsabmessung des Kanals (4).

11. Vorrichtung nach einem der vorstehenden Ansprüche, mit Mitteln (2) zum Erfassen des gestreuten Lichtes.

12. Vorrichtung nach Anspruch 11, bei der die Erfassungsmittel so angeordnet sind, daß das gesteute Licht über einen Bereich benachbarter Steuwinkel im wesentlichen gleichzeitig erfaßt werden kann.

13. Vorrichtung nach Anspruch 11 oder 12, bei der die Erfassungsmittel so angeordnet sind, daß sie das Licht im wesentlichen senkrecht zur äußeren Oberfläche der Zelle (3) erfassen.

14. Vorrichtung nach einem der vorstehenden Ansprüche, bei der das lichtdurchlässige Material der Zelle (3) einen höheren Brechungsindex als die Flüssigkeits-Suspension aufweist.

15. Verfahren zur Messung von an in einer Flüssigkeit suspendierten Partikeln gestreutem Licht, mit den Schritten: Anbringen der die Partikel tragenden Flüssigkeit an einer optisch polierten Oberfläche eines lichtdurchlässigen Materials, Beleuchten der Flüssigkeit mit einem kollimierten Lichtstrahl und Messen des an den Partikeln in der Flüssigkeit gestreuten Lichtes, wobei das gestreute Licht durch die polierte Oberfläche und einen Teil des Materials hindurchtritt, dadurch gekennzeichnet, daß der kollimierte Lichtstrahl in einer Richtung parallel zu der genannten Oberfläche auf die Flüssigkeit trifft, so daß der ungestreute Strahl ohne Ablenkung längs der Oberfläche und über diese hinaus verläuft.

16. Verfahren nach Anspruch 15, bei dem das Material einen größeren Brechungsindex als die Flüssigkeit aufweist.

17. Verfahren nach Anspruch 15 oder 16, bei dem die die Partikel tragende Flüssigkeit sich in einem geradlinigen, durch das Material verlaufenden Kanal (4) befindet.

18. Verfahren nach Anspruch 17, bei dem der kollimierte Lichtstrahl von einem Laser erzeugt wird und in dem Kanal eine maximale Querschnittsabmessung aufweist, die kleiner ist als die minimale Querschnittsabmessung des Kanals.

19. Verfahren nach einem der Ansprüche 15 bis 18, bei dem die Streuintensitäten des Lichts normiert werden durch:

A. Messen der Intensität $I_s$ des Lichts, nachdem es die Probe längs der Strahlenwege durchquert hat,

B. Messen eines Anteils $I_f$ der Intensität des auftreffenden Lichts der Lichtquelle bevor es in die Probe eintritt und

C. Dividieren sämtlicher bei den verschiedenen Streuwinkeln gemessener Streuintensitäten durch die Größe $\sqrt{I_f I_s}$.

20. Verfahren nach einem der Ansprüche 15 bis 19, bei dem das Material die Form eines Zylinders hat und sich die die Partikel tragende Flüssigkeit in einem längs einer Sehne durch den Zylinder verlaufenden Kanal befindet.

21. Verfahren nach einem der Ansprüche 15 bis 19, bei dem das Material die Form einer Kugel hat und eine partikeltragende Flüssigkeit sich in einen diametral durch die Kugel verlaufenden Kanal befindet.

22. Verfahren nach einem der Ansprüche 15 bis 21, mit den Schritten: Bestimmen eines gewünschten Satzes von Streuwinkeln θ, bei denen die Streuung erfaßt werden soll, und Positionieren von Detektormitteln (2) zum Erfassen des durch die partikeltragende Flüssigkeit gestreuten Lichtes an transformierten Winkelpositionen θ' derart, daß die transformierten Positionen jeweils dem gewünschten Satz von Streuwinkeln entsprechen, wobei Brechungseffekte korrigiert werden können.

23. Verfahren nach Anspruch 22 in der Rückbeziehung auf Anspruch 20, bei dem die Detektormittel (2) um den Zylinder herum angeordnet sind und die transformierten Winkelpositionen θ' aus den Streuwinkeln θ hergeleitet sind gemäß der Beziehung

$$\theta' = \cos^{-1}\left[\frac{n_1}{n_2}\cos\theta\right]$$

wobei $n_1$ der Brechungsindex des streuenden Mediums und $n_2$ der Brechungsindex des Zylinders ist.

24. Verfahren nach Anspruch 22 in der Rückbeziehung auf Anspruch 21, bei dem die Detektormittel in auf Großkreisen liegenden Gruppen um die Kugel herum angeordnet sind und die Detektor-Winkelpositionen θ' in Bezug auf die Polachse durch die Flüssigkeits-Suspension aus den Steuwinkeln θ hergeleitet sind gemäß der Beziehung

$$\theta' = \cos^{-1}\left[\frac{n_1}{n_2}\cos\theta\right]$$

wobei $n_1$ der Brechnungsindex des streuenden Mediums und $n_2$ der Brechungsindex der Kugel ist.

25. Verfahren nach Anspruch 22, 23 oder 24, bei dem die Detektormittel sämtlich so angeordnet sind, daß sie Licht erfassen, das im wesentlichen von dem selben Punkt in der partikeltragenden Flüssigkeit gestreut wurde.

FIGURE 1

Fig 2.

FIGURE 3

FIGURE 4

4